(19) Europäisches Patentamt / European Patent Office / Office européen des brevets

(11) **EP 3 875 906 B1**

(12) **FASCICULE DE BREVET EUROPEEN**

(45) Date de publication et mention de la délivrance du brevet:
**01.04.2026 Bulletin 2026/14**

(21) Numéro de dépôt: **21158918.9**

(22) Date de dépôt: **24.02.2021**

(51) Classification Internationale des Brevets (IPC):
**G01C 21/00** *(2006.01)* **G01C 21/26** *(2006.01)*

(52) Classification Coopérative des Brevets (CPC):
**G01C 21/3815; G01C 21/26**

(54) **PROCÉDÉ DE DÉTERMINATION DU TYPE DE VOIE EMPRUNTÉE PAR UN VÉHICULE AUTOMOBILE**

VERFAHREN ZUR BESTIMMUNG DER ART DER FAHRSPUR, DIE EIN KRAFTFAHRZEUG BENUTZT

METHOD FOR DETERMINING THE TYPE OF TRACK TAKEN BY A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2020 FR 2002104**

(43) Date de publication de la demande:
**08.09.2021 Bulletin 2021/36**

(73) Titulaire: **Renault s.a.s**
**92100 Boulogne Billancourt (FR)**

(72) Inventeurs:
• **GIVARNET, Sébastien**
**91200 Athis-Mons (FR)**
• **ROTROU, Martial**
**91690 Saclas (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
EP-A1- 3 173 306          IN-A- 201641 035 102
US-A1- 2002 128 751

# Description

## DOMAINE TECHNIQUE DE L'INVENTION

La présente invention concerne de manière générale les véhicules automobiles.

Elle concerne plus particulièrement un procédé permettant de déterminer les types de voies sur lesquelles le véhicule automobile a roulé.

## ETAT DE LA TECHNIQUE

On connaît du document WO2018011500 une méthode permettant de déterminer si la voie empruntée par un véhicule automobile est en bon état ou non.

Cette méthode, bien que satisfaisante en tant que telle lorsqu'il s'agit de régler la suspension du véhicule en temps réel ou de choisir un trajet dont les routes sont en bon état, ne permet toutefois pas d'obtenir autant d'informations que l'on souhaite sur les voies empruntées par les véhicules automobiles. Elle ne permet notamment pas de connaître précisément l'usage qui est fait de chaque véhicule automobile.

On pourrait déterminer cet usage en exploitant les données issues des systèmes de navigation (par exemple des systèmes GPS) des véhicules, mais cette exploitation n'est ici pas souhaitée car jugée trop invasive vis-à-vis des données personnelles des usagers des véhicules automobiles.

Des méthodes par réseaux de neurones tels que dans US20020128751 nécessitent un nombre de roulages important et imposent un choix figé des paramètres de la méthode et des environnements à catégoriser, sans évolution aisée puisque tout l'apprentissage serait alors à reprendre.

## PRÉSENTATION DE L'INVENTION

Afin de remédier à l'inconvénient précité de l'état de la technique, la présente invention propose de déterminer l'usage qui est fait du véhicule de manière non invasive, c'est-à-dire sans exploiter aucune donnée personnelle des usagers du véhicule automobile.

Plus particulièrement, on propose selon l'invention un procédé de détermination d'un type de voie empruntée par un véhicule automobile, comportant des étapes de :

- acquisition par un calculateur, durant au moins un intervalle de travail, des valeurs d'au moins deux paramètres qui sont issues de mesures réalisées par des capteurs équipant le véhicule automobile et qui sont relatifs à la dynamique du véhicule,
- détermination par le calculateur, pour chaque paramètre et pour une même période d'échantillonnage comprise dans chacun desdits intervalles de travail, d'un coefficient de probabilité que le véhicule se trouve sur un type de voie plutôt qu'un autre, en fonction des valeurs prises par le paramètre pendant ladite période d'échantillonnage, et
- déduction par le calculateur, en fonction des coefficients de probabilité déterminés, du type de voie empruntée par le véhicule automobile durant ladite période d'échantillonnage.

Ainsi, grâce à l'invention, on exploite les valeurs de paramètres qui sont généralement déjà mesurés sur les véhicules automobiles (vitesse, régime-moteur, angle au volant...) pour en déduire, sur la base d'une méthode statistique et probabiliste, le type de voie probablement empruntée par le véhicule automobile.

Cette méthode nécessite une seule opération préalable d'essais sur routes visant à déterminer des seuils pour chaque paramètre, en dessous desquels on peut statistiquement observer que les véhicules d'essais évoluaient généralement plutôt sur un certain type de voie et au-dessus desquels on peut statistiquement observer que les véhicules d'essais évoluaient généralement plutôt sur un autre type de voie. Les seuils obtenus sont alors valables pour tous les véhicules de tourisme.

Le procédé selon l'invention exploite ensuite ces seuils et les données mesurées par les véhicules automobiles pour déterminer la probabilité que le véhicule se trouve sur un type de voie plutôt qu'un autre.

Le procédé ici proposé est donc facile à mettre en œuvre. Il ne nécessite l'ajout d'aucun moyen technique particulier sur les véhicules, et notamment pas de puce de géolocalisation. Il n'est pas invasif vis-à-vis des données personnelles des usagers des véhicules et ses résultats sont facilement exploitables en temps réel ou en après-vente, pour ajuster les réglages du véhicule ou pour améliorer un modèle de véhicule en fonction des usages qui en sont faits.

D'autres caractéristiques avantageuses et non limitatives du procédé conforme à l'invention, prises individuellement ou selon toutes les combinaisons techniquement possibles, sont les suivantes :

- le type de voie est sélectionné parmi au moins les autoroutes, les routes d'agglomération, les routes de campagne, et éventuellement aussi les routes de montagne ;
- les valeurs des paramètres sont moyennées sur leurs intervalles de travail, et les moyennes obtenues sont chacune comparées à au moins un seuil prédéterminé pour en déduire les coefficients de probabilité ;
- un premier des paramètres étant la vitesse longitudinale du véhicule automobile, il est prévu une opération de filtrage de la moyenne des valeurs du premier paramètre durant laquelle si, pour un intervalle de travail, la moyenne est inférieure à un seuil déterminé, le type de voie pour chaque période d'échantillonnage compris dans ledit intervalle de travail est déterminé en fonction du type de voie déduit pour la période d'échantillonnage qui suit ou qui précède ledit intervalle de travail ;

- les intervalles de travail utilisés pour l'acquisition des valeurs des deux paramètres coïncident en partie seulement ;
- les intervalles de travail sont des intervalles de distance ou de temps ;
- les étapes d'acquisition et de détermination sont réalisées avec au moins cinq paramètres distincts, et de préférence avec un nombre impair de paramètres distincts qui est par exemple égal à sept ;
- les paramètres sont choisis parmi : une vitesse longitudinale du véhicule automobile, une accélération longitudinale du véhicule automobile, une vitesse angulaire d'un élément d'un système de direction du véhicule automobile, un couple développé par un moteur équipant le véhicule automobile, une pente de la voie empruntée par le véhicule automobile, une durée pendant laquelle le régime dudit moteur est inférieur à un seuil prédéterminé, et un nombre de virages rencontrés par le véhicule ;
- les valeurs desdits paramètres sont uniquement issues de mesures réalisées par des capteurs internes du véhicule ;
- lesdits capteurs internes communiquent exclusivement avec des composants internes du véhicule automobile.

L'invention concerne aussi une utilisation du procédé de détermination précité, dans lequel, l'étape de déduction étant mise en œuvre pendant le roulage du véhicule automobile, il est prévu pendant ledit roulage une opération subséquente d'ajustement d'au moins un réglage interne du véhicule automobile en fonction du type de voie déterminé.

Elle concerne également une utilisation du procédé de détermination précité, dans lequel, le véhicule ayant effectué plusieurs trajets, il est prévu une opération subséquente de détermination de l'usage principal du véhicule automobile ou de détermination de l'usure d'au moins une pièce d'usure du véhicule automobile en fonction des types de voies détectés sur lesdits plusieurs trajets.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est un exemple de matrice générée dans le cadre du procédé conforme à l'invention ;
[Fig. 2] est un premier type de logigramme utilisé dans le cadre du procédé conforme à l'invention ;
[Fig. 3] est un deuxième type de logigramme utilisé dans le cadre du procédé conforme à l'invention ; et
[Fig. 4] est un troisième type de logigramme utilisé dans le cadre du procédé conforme à l'invention.

La présente invention porte sur l'exploitation des données internes acquises par un véhicule automobile.

Un tel véhicule automobile se présente par exemple sous la forme d'une voiture, d'un camion ou d'une motocyclette.

Il s'agit dans l'exemple ici considéré d'une voiture comportant quatre roues, un châssis, un moteur et un système de direction.

Le moteur peut aussi bien être du type à combustion interne et/ou électrique.

Le système de direction comporte un volant et un ensemble d'arbres et éventuellement d'actionneurs permettant de faire tourner les roues directrices du véhicule en fonction de l'angle du volant.

Ce véhicule automobile est classiquement aussi équipé d'un calculateur comportant un processeur, une mémoire et une interface d'entrée et de sortie.

Grâce à son interface, le calculateur est adapté à communiquer avec différents composants du véhicule, via un bus de données de type CAN (de l'anglais « Controller Area Network »).

Le calculateur peut ainsi recevoir des signaux d'entrée provenant de différents capteurs internes équipant le véhicule.

Par « capteur interne », on entend des capteurs qui sont embarqués sur le véhicule automobile et qui communiquent (de préférence) uniquement avec les différents calculateurs du véhicule, ainsi qu'avec la prise diagnostic. Une puce GPS ou une puce de téléphonie mobile ne peut donc pas être qualifié de capteur interne. Avantageusement, ces capteurs internes mesurent des paramètres physiques monodimensionnels.

Les signaux d'entrée ici considérés sont tous relatifs à la dynamique du véhicule, c'est-à-dire à son déplacement. Il peut donc s'agir de données relatives au moteur, au système de direction, aux roues, à la forme de la route empruntée, à la position ou vitesse ou accélération ou dérivée d'accélération du véhicule, à la pression atmosphérique...

Dans le mode de réalisation ici présenté, le calculateur reçoit plusieurs données d'entrée, à savoir :

- la vitesse longitudinale du véhicule automobile, mesurée par exemple au moyen d'un capteur de vitesse angulaire des roues,
- l'accélération transversale subie par le véhicule automobile dans le plan de la route, selon une direction orthogonale à la direction d'avance du véhicule (mesurée par exemple au moyen d'un accéléromètre),

- la position angulaire du volant (mesurée par exemple au moyen d'un capteur de position angulaire du volant),
- la pression atmosphérique (mesurée par exemple au moyen d'un capteur de pression),
- le régime du moteur à combustion interne (mesuré par exemple au moyen d'un capteur de vitesse angulaire du vilebrequin du moteur), et
- la position ou la pression exercée sur la pédale d'accélérateur (mesurée par exemple au moyen d'un capteur placé sur cette pédale).

La mémoire mémorise des informations utilisées dans le cadre du procédé décrit ci-après.

Elle mémorise notamment plusieurs registres de base de données, dont les architectures en formes de matrices seront détaillées dans la suite de cet exposé.

Elle mémorise également une application informatique, constituée de programmes d'ordinateur comprenant des instructions dont l'exécution par le processeur permet la mise en œuvre par le calculateur du procédé décrit ci-après.

L'objectif de ce procédé est de déterminer, par exemple sur une partie d'un trajet ou sur un trajet entier ou encore sur plusieurs trajets, les types des voies empruntées par le véhicule automobile.

Dans le mode de réalisation ici présenté, on souhaite savoir la répartition du roulage effectué sur autoroute, sur route de montagne, en agglomération et sur autres routes (ci-après appelées routes de campagne) par un véhicule automobile.

Pour cela, au cours d'une première étape, le calculateur acquiert, via les capteurs internes, les données d'entrée précitées.

Cette acquisition est réalisée à une fréquence donnée, par exemple de 1 Hz, appelée fréquence d'échantillonnage. On appellera alors ci-après une période d'échantillonnage $\delta t$ une période de temps (ici d'une seconde) située entre deux acquisitions successives des données d'entrée.

Le calculateur déduit, en fonction des données d'entrée mesurées et acquises, les valeurs de plusieurs paramètres $P_1$, $P_2$, $P_3$, $P_4$, $P_5$, $P_6$, $P_7$. Ces paramètres sont au moins au nombre de deux. Ils sont préférentiellement un nombre impair pour éviter au maximum de se retrouver deux ensembles de paramètres qui seraient de mêmes tailles et qui fourniraient des résultats contradictoires. Ils sont ici au nombre de sept, à savoir :

- la vitesse longitudinale $P_1$ du véhicule automobile,
- l'accélération longitudinale $P_2$ du véhicule automobile,
- la vitesse angulaire $P_3$ du volant,
- le couple $P_4$ développé par le moteur,
- la pente $P_5$ de la voie empruntée par le véhicule automobile,
- la durée $P_6$ pendant laquelle le régime du moteur est inférieur à un seuil prédéterminé, et

- le nombre de virages $P_7$ rencontrés par le véhicule.

La vitesse longitudinale $P_1$ est directement mesurée par un capteur interne, la vitesse angulaire $P_3$ du volant est dérivée de la valeur d'angle au volant mesurée par le capteur du même nom, et la durée $P_6$ pendant laquelle le régime du moteur est inférieur à un seuil prédéterminé est calculée par un compteur utilisant la fréquence d'échantillonnage et la mesure du régime moteur issue par exemple d'un compte-tours.

L'accélération longitudinale $P_2$ pourrait être mesurée par un accéléromètre. Toutefois, ici, elle est préférentiellement obtenue en dérivant la vitesse longitudinale du véhicule par rapport au temps.

Le couple $P_4$ développé par le moteur est déterminé par un calculateur-moteur et transite par le bus de données de type CAN, il est par exemple fonction du régime moteur et de la position de la pédale d'accélérateur.

La pente $P_5$ de la voie empruntée par le véhicule automobile est obtenue en fonction des écarts de pression atmosphérique mesurés dans le temps.

Le nombre de virages $P_7$ empruntés par le véhicule est déterminé en fonction de l'accélération transversale subie par le véhicule et mesurée par un accéléromètre.

Une fois qu'il a obtenu les valeurs de ces sept paramètres, le calculateur (ou un autre calculateur qui n'est pas nécessairement embarqué dans le véhicule) va tenter de déterminer, pour chaque paramètre, le type de voie sur laquelle le véhicule se trouvait.

Dans le cas d'un calculateur embarqué, les calculs sont réalisés en interne du véhicule et peuvent permettre de modifier en direct certains paramètres du véhicule (loi de suspension, assistance de direction,...). En revanche, dans le cas d'un calculateur débarqué, les calculs peuvent être réalisés une fois les roulages terminés, par exemple pour estimer l'usure des pneumatiques ou l'encrassement du filtre à particules, en fonction des routes empruntées.

L'idée est que chaque paramètre va permettre de calculer un coefficient de probabilité que le véhicule se trouve sur un type de voie plutôt qu'un autre. Ces coefficients de probabilité pourront ensuite être combinés de façon à déterminer avec une meilleure fiabilité le type de voie empruntée par le véhicule.

Pour déterminer ces coefficients de probabilité, le calculateur va générer sept matrices chacune associée à l'un des sept paramètres.

Il opère sensiblement de la même façon pour la majorité de ces paramètres, ce que l'on peut résumer de la manière suivante.

Tout d'abord, le calculateur découpe le trajet en intervalles de travail. Il peut s'agir d'intervalles de temps ou de distance. Chaque intervalle de travail présente une durée préférentiellement strictement supérieure à la période d'échantillonnage $\delta t$ (cette durée est de préférence au moins dix fois supérieure à la période d'échantillonnage). Préférentiellement, la valeur des intervalles de travail n'est pas unique pour tous les paramètres mais propre à chaque paramètre ou à des groupes de paramètres.

Le calculateur calcule ensuite une moyenne du paramètre pendant cet intervalle de travail. Puis il compare cette moyenne avec un ou plusieurs seuils prédéfinis.

On pourra à ce stade préciser que les seuils utilisés pourront être élaborés à la suite d'une campagne d'essais sur différents types de route connus.

Le résultat de cette comparaison va alors lui permettre de définir le type le plus probable de voie qui était empruntée par le véhicule pendant cet intervalle de travail.

Chaque matrice sera alors construite en affectant la valeur 1 à la colonne associée au type de voie le plus probablement emprunté, et en affectant la valeur 0 aux autres colonnes.

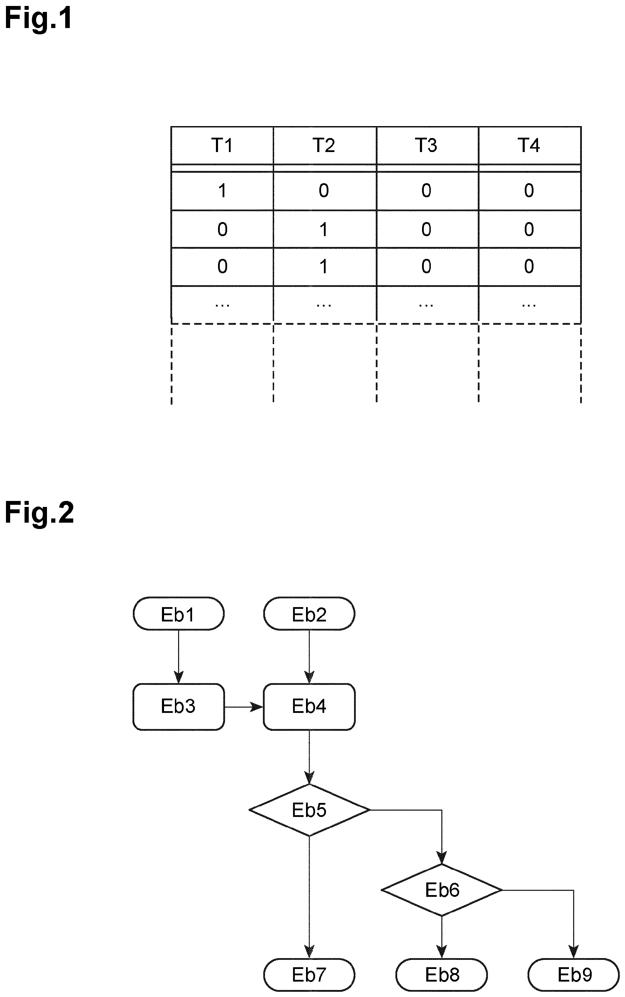

Comme le montre la figure 1, chaque matrice (associée à un paramètre) présente ici quatre colonnes, dont une première colonne T1 associée à une route en agglomération, une seconde colonne T2 associée à une route de montagne, une troisième colonne T3 associée à une route de campagne, et une quatrième colonne T4 associée à une autoroute. Le nombre des colonnes et leur typage n'est pas limitatif, d'autres types de routes pourraient également être concernées par exemple les circuits, ou encore les routes non carrossées (chemins).

Chaque matrice comporte autant de lignes que de périodes d'échantillonnage $\delta t$ considérées.

Alors, si le résultat de la comparaison précitée indique par exemple que le type de voie est « autoroute » pendant un intervalle de travail de par exemple 100 périodes d'échantillonnage $\delta t$, le calculateur est programmé pour compléter la matrice correspondant au paramètre considéré par cent nouvelles lignes identiques dans lesquelles les coefficients de la colonne T4 sont tous mis à un et dans lesquelles tous les autres coefficients sont mis à zéro.

Les valeurs ainsi affectées aux colonnes des matrices forment des coefficients de probabilité égal à 0 ou 1.

On peut maintenant décrire en détail comment les sept matrices associées aux sept paramètres considérés sont précisément obtenus.

On considérera dans le mode de réalisation ici présenté que les valeurs des paramètres mesurés sont exploitées a posteriori, c'est-à-dire après que le véhicule a effectué un ou plusieurs trajets complets, puis que ces trajets sont ensuite examinés par le calculateur. On considérera par simplification que le véhicule n'a réalisé qu'un seul trajet.

Le premier paramètre considéré est la vitesse longitudinale $P_1$ du véhicule automobile, dont des valeurs ont été successivement mesurées à des pas de temps successifs et réguliers.

Ce paramètre permet de dissocier les routes en agglomération et les autoroutes des autres types de voies. En effet, la vitesse sera très élevée sur autoroute, et très réduite sur route en agglomération.

On peut décrire la façon selon laquelle les valeurs de ce paramètre sont exploitées en se référant à la figure 2.

Comme le montre cette figure 2, au cours d'une première étape (ici représentée par les rectangles référencés Eb1 et Eb2), le calculateur acquiert les valeurs successivement prises par la vitesse longitudinale $P_1$ du véhicule automobile le long du trajet.

Au cours d'une seconde étape Eb3, le calculateur découpe le trajet en plusieurs intervalles de travail $\Delta_1$.

Ici, ces intervalles de travail $\Delta_1$ ne présentent pas des intervalles de temps ou de distance réguliers. Ils sont plutôt découpés en fonction de la dérivée seconde de la vitesse par rapport au temps (laquelle dérivée seconde est préférentiellement filtrée par un filtre passe bas d'ordre 1 ou 2, voire 3 de façon à supprimer ici les fréquences supérieures à 0,01 Hz). Ainsi, à chaque fois que cette dérivée seconde filtrée s'annule, ce qui correspond à un point d'inflexion de la vitesse, un nouvel intervalle de travail $\Delta_1$ est créé.

Chaque intervalle de travail $\Delta_1$ correspond donc à un nombre de périodes d'échantillonnage $\delta t$ variable.

Cette solution de découpage permet de s'assurer que la vitesse au sein de chaque intervalle de travail $\Delta_1$ reste sensiblement constante et que la moyenne qui sera ensuite calculée aura un sens exploitable.

Au cours d'une troisième étape Eb4, le calculateur calcule alors la moyenne arithmétique, au sein de chaque intervalle de travail $\Delta_1$, de la vitesse longitudinale $P_1$ du véhicule automobile.

A l'issue de cette étape, le calculateur opère une opération de filtrage des vitesses moyennes. Si l'une d'entre elles est inférieure ou égale à un seuil de vitesse prédéterminé (lequel est préférentiellement compris entre 1 et 10 km/h), le calculateur affecte le même type de route à cet intervalle qu'à l'intervalle suivant (ou précédent si celui-ci n'existe pas).

Ainsi, dans le cas d'un arrêt sur une aire d'autoroute, on affectera donc à l'intervalle de temps correspondant à la pause (moyenne nulle) le type « autoroute », puisque l'on considérera l'intervalle suivant.

On peut en effet alors considérer que cette situation correspond à un temps d'arrêt prolongé du véhicule. Si cette opération de filtrage n'était pas effectuée, le risque serait qu'un arrêt sur une aire de repos d'une autoroute soit considéré comme un roulage en ville.

Puis, au cours d'étapes Eb5 et Eb6, le calculateur compare la valeur de la vitesse moyenne calculée au sein de l'intervalle de travail $\Delta_1$ avec deux seuils prédéfinis (un seuil de vitesse minimum et un seuil de vitesse maximum).

A titre d'exemple, le seuil de vitesse minimum pourrait être égal à environ 50 km/h, et le seuil de vitesse maximum pourrait être compris entre 80 et 90 km/h.

Si la valeur moyenne de la vitesse longitudinale $P_1$ est inférieure au seuil de vitesse minimum, on peut supposer que le véhicule est dans une agglomération. Alors, au cours d'une étape Eb7, le calculateur affecte à toutes les lignes de la matrice de vitesse qui correspondent à des périodes d'échantillonnage $\delta t$ compris dans l'intervalle de travail $\Delta_1$, la valeur 1 à la colonne T1 (routes en agglomération) et la valeur 0 aux autres colonnes.

Si la valeur moyenne de la vitesse longitudinale $P_1$ est supérieure au seuil de vitesse maximum, on peut supposer que le véhicule est sur autoroute. Alors, au cours d'une étape Eb9, le calculateur affecte à ces mêmes lignes de la matrice de vitesse, la valeur 1 à la colonne T4 (autoroute) et la valeur 0 aux autres colonnes.

Si la valeur moyenne de la vitesse longitudinale $P_1$ est comprise entre le seuil de vitesse minimum et le seuil de vitesse maximum, on peut supposer que le véhicule est sur route de montagne ou sur route de campagne. Alors, au cours d'une étape Eb8, le calculateur affecte à ces mêmes lignes de la matrice de vitesse, la valeur 1 aux colonnes T2 et T3, et la valeur 0 aux autres colonnes.

Le second paramètre considéré est l'accélération longitudinale $P_2$ du véhicule automobile.

Ce paramètre permet de dissocier les autoroutes des routes de campagne, de montagne et en agglomération. En effet, l'accélération longitudinale $P_2$ sur autoroute est en moyenne moins élevée qu'ailleurs.

On peut décrire la façon selon laquelle les valeurs de ce paramètre sont exploitées en se référant encore à la figure 2.

Comme le montre cette figure 2, au cours d'une première étape Eb1, le calculateur mesure les valeurs successives de la vitesse longitudinale du véhicule automobile le long du trajet, puis il dérive cette vitesse longitudinale en fonction du temps. Lors d'une seconde étape Eb2, il acquiert le temps.

Au cours d'une troisième étape Eb3, le calculateur découpe le trajet en plusieurs intervalles de travail $\Delta_2$.

Ici, ces intervalles de travail $\Delta_2$ sont des intervalles de temps réguliers d'au moins une minute, afin que la moyenne qui en sera ensuite déduite soit représentative de la portion de trajet parcouru par le véhicule. L'intervalle de travail $\Delta_2$ est préférentiellement choisi égal à deux minutes.

Au cours d'une quatrième étape Eb4, le calculateur calcule alors la moyenne arithmétique, au sein de chaque intervalle de travail $\Delta_2$, de l'accélération longitudinale $P_2$ du véhicule automobile.

Puis, au cours d'étapes Eb5 et Eb6, le calculateur compare la valeur moyenne de l'accélération longitudinale $P_2$ avec deux seuils prédéfinis (un seuil d'accélération minimum et un seuil d'accélération maximum).

Le seuil d'accélération minimum est par exemple compris entre 0,1 et 0,4 m/s$^2$, tandis que le seuil d'accélération maximum est compris entre 0,6 et 1 m/s$^2$.

Si la valeur moyenne de l'accélération longitudinale $P_2$ est inférieure au seuil d'accélération minimum, on peut supposer que le véhicule est sur autoroute. Alors, au cours d'une étape Eb7, le calculateur affecte à toutes les lignes de la matrice d'accélération qui correspondent à des périodes d'échantillonnage $\delta t$ compris dans l'intervalle de travail $\Delta_2$, la valeur 1 à la colonne T4 (autoroutes) et la valeur 0 aux autres colonnes.

Si la valeur moyenne de l'accélération longitudinale $P_2$ est supérieure au seuil d'accélération maximum, on peut supposer que le véhicule est sur route de campagne ou sur route de montagne. Alors, au cours d'une étape Eb9, le calculateur affecte à ces mêmes lignes, la valeur 1 aux colonnes T2 et T3 et la valeur 0 aux autres colonnes.

Si la valeur moyenne de l'accélération longitudinale $P_2$ est comprise entre le seuil d'accélération minimum et le seuil d'accélération maximum, on peut supposer que le véhicule est sur route d'agglomération ou de campagne. Alors, au cours d'une étape Eb8, le calculateur affecte à ces mêmes lignes la valeur 1 aux colonnes T1 et T3 et la valeur 0 aux autres colonnes.

Le troisième paramètre considéré est la vitesse de rotation $P_3$ du volant du véhicule automobile.

Ce paramètre permet de dissocier les autoroutes des routes de campagne, de montagne et en agglomération. En effet, la vitesse de rotation $P_3$ du volant sur autoroute est en moyenne moins élevée qu'ailleurs.

On peut décrire la façon selon laquelle les valeurs de ce paramètre sont exploitées en se référant encore à la figure 2.

Comme le montre cette figure 2, au cours d'une première étape Eb1, le calculateur acquiert les valeurs successivement prises par la vitesse longitudinale du véhicule automobile le long du trajet.

Au cours d'une deuxième étape Eb2, le calculateur acquiert les valeurs successivement prises par l'angle du volant le long du trajet.

Au cours d'une troisième étape Eb3, le calculateur découpe le trajet en plusieurs intervalles de travail $\Delta_3$.

Ici, ces intervalles de travail $\Delta_3$ sont des intervalles de distance réguliers d'au moins 100 mètres, afin que la moyenne qui en sera ensuite déduite soit représentative de la présence ou de l'absence de zones de virage sur la portion de trajet parcouru par le véhicule. L'intervalle de distance est préférentiellement choisi égal à un kilomètre.

En pratique, le trajet considéré est découpé en intervalles de travail $\Delta_3$ en intégrant les valeurs de vitesses mesurées pour obtenir des intervalles de distance.

Au cours d'une troisième étape Eb4, le calculateur dérive par rapport au temps la fonction « angle au volant » de façon à obtenir la vitesse de rotation $P_3$ du volant à chaque période d'échantillonnage $\delta t$.

Puis, le calculateur calcule alors la moyenne arithmétique, au sein de chaque intervalle de travail $\Delta_3$ du

trajet, de la vitesse de rotation $P_3$ du volant du véhicule automobile.

Au cours d'étapes Eb5 et Eb6, le calculateur compare la valeur moyenne de la vitesse de rotation $P_3$ du volant avec deux seuils prédéfinis (un seuil de vitesse angulaire minimum et un seuil de vitesse angulaire maximum).

Le seuil de vitesse angulaire minimum est à titre d'exemple environ égal à 1°/s tandis que le seuil de vitesse angulaire maximum tourne autour de 5°/s.

Si la valeur moyenne de la vitesse de rotation $P_3$ est inférieure au seuil de vitesse angulaire minimum, on peut supposer que le véhicule est sur autoroute. Alors, au cours d'une étape Eb7, le calculateur affecte à toutes les lignes de la matrice de vitesse angulaire qui correspondent à des périodes d'échantillonnage $\delta t$ compris dans l'intervalle de travail $\Delta_3$, la valeur 1 à la colonne T4 (autoroutes) et la valeur 0 aux autres colonnes.

Si la valeur moyenne de la vitesse de rotation $P_3$ est supérieure au seuil de vitesse angulaire maximum, on peut supposer que le véhicule est en agglomération ou sur route de montagne. Alors, au cours d'une étape Eb9, le calculateur affecte à ces mêmes lignes la valeur 1 aux colonnes T1 et T2 et la valeur 0 aux autres colonnes.

Si la valeur moyenne de la vitesse de rotation $P_3$ est comprise entre le seuil de vitesse angulaire minimum et le seuil de vitesse angulaire maximum, on peut supposer que le véhicule est sur route de montagne ou de campagne. Alors, au cours d'une étape Eb8, le calculateur affecte à ces mêmes lignes la valeur 1 aux colonnes T2 et T3 et la valeur 0 aux autres colonnes.

Le quatrième paramètre considéré est le couple $P_4$ développé par le moteur du véhicule automobile.

Ce paramètre permet de dissocier les routes de campagne et les voies en agglomération des autoroutes et routes de montagne. En effet, le couple délivré par le moteur sur des zones de montagne ou sur autoroute sera en moyenne plus élevé qu'ailleurs.

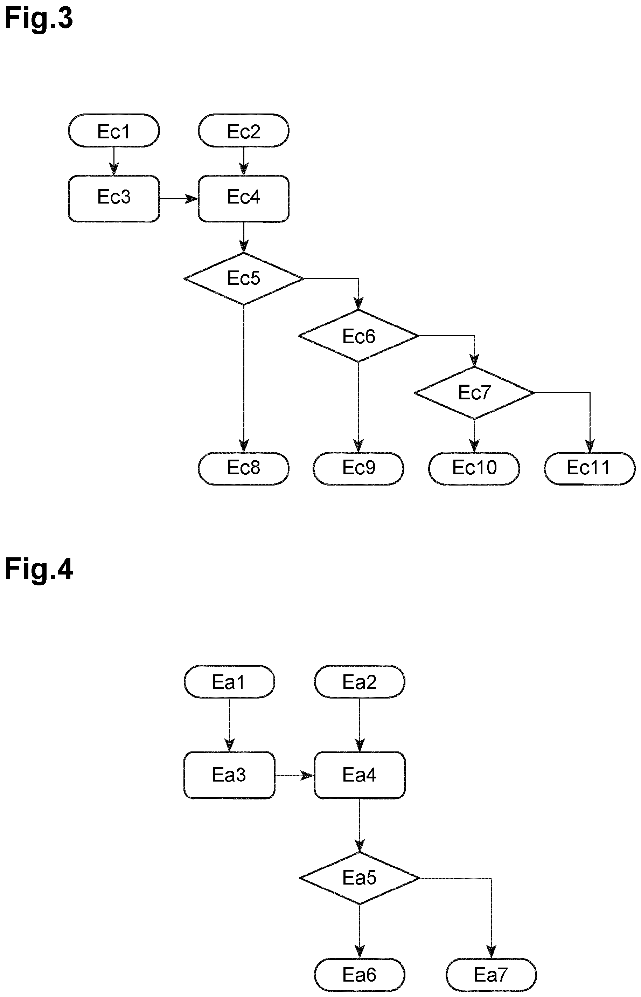

On peut décrire la façon selon laquelle les valeurs de ce paramètre sont exploitées en se référant à la figure 4.

Comme le montre la figure 4, au cours d'une première étape Ea1, le calculateur acquiert les valeurs successivement prises par la vitesse longitudinale du véhicule automobile le long du trajet.

Au cours d'une deuxième étape Ea2, le calculateur acquiert les valeurs successivement prises par le couple $P_4$ le long du trajet. Les valeurs représentatives du couple ici considérées ne sont pas des valeurs absolues, exprimées en N.m, mais plutôt des valeurs relatives par rapport au couple maximum que le moteur peut développer (il s'agit ici en pratique de pourcentage de couple maximum). De cette manière, le même algorithme peut être utilisé sur des véhicules équipés de moteurs différents.

Au cours d'une troisième étape Ea3, le calculateur découpe le trajet en plusieurs intervalles de travail $\Delta_4$.

Ici, ces intervalles de travail $\Delta_4$ sont des intervalles irréguliers, choisis de façon que le couple ne varie pas excessivement au sein de chaque intervalle. Un nouvel intervalle est ainsi défini à chaque fois que la vitesse longitudinale prend au moins une valeur de vitesse longitudinale prédéfinie. Ici, et de façon préférentielle, un nouvel intervalle est défini à chaque fois que la vitesse longitudinale prend la valeur 20 km/h et 90 km/h.

Au cours d'une quatrième étape Ea4, le calculateur calcule la moyenne arithmétique, au sein de chaque intervalle de travail $\Delta_4$, des valeurs représentatives du couple.

Puis, au cours d'une cinquième étape Ea5, pour chaque intervalle de travail $\Delta_4$, le calculateur compare la valeur moyenne du couple $P_4$ avec un seuil représentatif de couple prédéfini.

Ce seuil peut par exemple être choisi entre 15 et 30% du couple maximum que le moteur peut développer.

Si la valeur moyenne du couple $P_4$ est inférieure au seuil de couple, on peut supposer que le véhicule est en agglomération ou sur route de campagne. Alors, au cours d'une étape Ea6, le calculateur affecte à toutes les lignes de la matrice de couple qui correspondent à des périodes d'échantillonnage $\delta t$ compris dans l'intervalle de travail $\Delta_4$, la valeur 1 aux colonnes T1 et T3 de la matrice de couple et la valeur 0 aux autres colonnes.

En revanche, si la valeur moyenne du couple $P_4$ est supérieure au seuil de couple, on peut supposer que le véhicule est sur route de montagne ou sur autoroute. Alors, au cours d'une étape Ea7, le calculateur affecte à ces mêmes lignes la valeur 1 aux colonnes T2 et T4 et la valeur 0 aux autres colonnes.

Le cinquième paramètre considéré est la pente $P_5$ de la voie empruntée par le véhicule automobile.

Ce paramètre permet de dissocier les routes de montagne des autres types de routes. En effet, la pente moyenne des routes sur des zones montagneuses est plus élevée qu'ailleurs.

On peut décrire la façon selon laquelle les valeurs de ce paramètre sont exploitées en se référant à la figure 4.

Comme le montre la figure 4, au cours d'une première étape Ea1, le calculateur acquiert les différentes valeurs de la vitesse longitudinale du véhicule automobile le long du trajet.

Au cours d'une deuxième étape Ea2, le calculateur acquiert les différentes valeurs prises par la pression atmosphérique le long du trajet.

Au cours d'une troisième étape Ea3, le calculateur découpe le trajet en plusieurs intervalles de travail $\Delta_5$.

Ici, ces intervalles de travail $\Delta_5$ sont des intervalles de distance réguliers, choisis de façon que les résultats soient représentatifs du type de voie empruntée par le véhicule.

Il s'agit ici d'intervalle de plus de 100 mètres, et préférentiellement d'intervalles de 1 km. Par exemple, on calcule la pente pour des sections de 100m et on en fait la moyenne sur un intervalle de 1km. Le trajet est alors découpé en intervalles de travail $\Delta_5$ en intégrant les valeurs de vitesses mesurées pour obtenir des intervalles de distance.

Au cours d'une quatrième étape Ea4, le calculateur calcule la moyenne arithmétique, au sein de chaque intervalle de travail $\Delta_5$, des valeurs de pente $P_5$.

Pour cela, le calculateur détermine, en fonction de la pression atmosphérique, l'altitude à laquelle se trouvait le véhicule au moins en début en en fin d'intervalle de travail $\Delta_5$. Ici, cette altitude est déterminée davantage de fois : elle est déterminée tous les 100 mètres. C'est d'ailleurs plus précisément un écart d'altitude qui est déterminé entre le début et la fin de chaque tronçon de 100 mètres.

Ici, le calcul de l'altitude f(t) en fonction de la pression atmosphérique p(t) est opéré à l'aide de l'équation suivante :

[Math. 1]

$$f(t) = \frac{288.15}{0.0065} \cdot \left| 1 - \left( \frac{p(t)}{1013.25} \right)^{\frac{1}{5.255}} \right|$$

Ce calcul d'altitude est approximatif car il faudrait y intégrer une notion de température et des données météorologiques pour obtenir une valeur plus précise. Mais cela importe peu car seule la variation d'altitude est ici utilisée.

Cette altitude f(t) est ensuite filtrée au moyen d'un filtre passe-bas d'ordre 1 ou 2, voire 3 de façon à supprimer ici les fréquences supérieures à 0,02 Hz.

Le calcul de la pente g(t) tous les 100 mètres de distance parcourue est ensuite réalisé en fonction de cette altitude filtrée $f_f$(t) à l'aide de l'équation suivante :

[Math. 2]

$$g(t) = 100. \frac{|f_f(t_i) - f_f(t_{i+1})|}{\sqrt{100^2 - \left( f_f(t_i) - f_f(t_{i+1}) \right)^2}}$$

Dans cette équation, la variable $t_i$ correspond à l'instant en début d'intervalle de 100 mètres, et la variable $t_{i+1}$ correspond à l'instant à la fin de cet intervalle de 100 mètres.

La moyenne arithmétique des valeurs de pente $P_5$, au sein de chaque intervalle de travail $\Delta_5$ de 1 km de longueur, est alors calculée en fonction des dix valeurs de pentes g(t) obtenues.

Puis, au cours d'une étape Ea5, le calculateur compare la valeur moyenne de la pente $P_5$ avec un seuil de pente prédéfini (ici de l'ordre de 5%).

Si la valeur moyenne de la pente $P_5$ est inférieure au seuil de pente, on peut supposer que le véhicule est en agglomération ou sur route de campagne ou sur autoroute. Alors, au cours d'une étape Ea6, le calculateur affecte à toutes les lignes de la matrice de pente qui correspondent à des périodes d'échantillonnage $\delta t$ compris dans l'intervalle de travail $\Delta_5$, la valeur 1 aux colonnes T1, T3 et T4 et la valeur 0 à la dernière colonne.

En revanche, si la valeur moyenne de la pente $P_5$ est supérieure au seuil de pente, on peut supposer que le véhicule est sur route de montagne. Alors, au cours d'une étape Ea7, le calculateur affecte à ces mêmes lignes la valeur 1 à la colonne T2 et la valeur 0 aux autres colonnes.

Le sixième paramètre considéré est la durée $P_6$ pendant laquelle le véhicule est à une vitesse nulle ou quasi nulle (feu, stop, cédez le passage...), en prenant par exemple en considération le régime moteur. On considérera ici que le véhicule est à une vitesse nulle ou quasi nulle lorsque le moteur est au ralenti (s'il s'agit d'un moteur à combustion interne) ou sensiblement à l'arrêt (s'il s'agit d'un moteur électrique).

Ce paramètre permet de dissocier les routes en agglomération (sur lesquelles le véhicule est forcé de s'arrêter, du fait des stops, des feux tricolores et de différents autres évènements) des autres types de routes.

On peut décrire la façon selon laquelle les valeurs de ce paramètre sont exploitées en se référant à la figure 4.

Comme le montre la figure 4, au cours d'une première étape Ea1, le calculateur acquiert les valeurs successivement prises par la vitesse longitudinale du véhicule automobile le long du trajet.

Au cours d'une deuxième étape Ea2, le calculateur acquiert les valeurs successivement prises par le régime du moteur et le compare au régime critique représentatif de l'arrêt du véhicule afférent à la technologie.

Au cours d'une troisième étape Ea3, le calculateur découpe le trajet en plusieurs intervalles de travail $\Delta_6$.

Ici, ces intervalles de travail $\Delta_6$ sont des intervalles de distance réguliers, choisis de façon que les résultats soient représentatifs du type de voie empruntée par le véhicule.

Il s'agit ici d'intervalle de plus de 100 mètres, et préférentiellement d'intervalles de 1 km de long. Le trajet est alors découpé en intervalles de travail $\Delta_6$ en intégrant les valeurs de vitesses mesurées pour obtenir des intervalles de distance.

Au cours d'une quatrième étape Ea4, le calculateur calcule la moyenne arithmétique, au sein de chaque intervalle de travail $\Delta_6$, des durées pendant lesquelles le régime du moteur était inférieur à un seuil de régime (ici de 2000 tours par minutes s'il s'agit d'un moteur à combustion interne et de quelques centaines de tours par minute s'il s'agit d'un moteur électrique) et pendant lesquels la vitesse longitudinale du véhicule était inférieur à un autre seuil (ici 10 km/h).

On notera ici que l'utilisation d'un seuil de vitesse longitudinale permet notamment d'appliquer le procédé ici décrit aux véhicules équipés d'une option qui permet de couper le moteur ou de le mettre au ralenti lorsque le véhicule se trouve dans une grande descente et à vitesse élevée, ce qui permet de réduire sa consommation.

Puis, au cours d'une étape Ea5, le calculateur compare la valeur moyenne de durée $P_6$ avec un seuil de durée prédéfini.

Si la valeur moyenne de durée $P_6$ est supérieure au seuil de durée, on peut supposer que le véhicule est en agglomération ou assimilé. Alors, au cours d'une étape Ea7, le calculateur affecte à toutes les lignes de la matrice de durée qui correspondent à des périodes d'échantillonnage $\delta t$ compris dans l'intervalle de travail $\Delta_6$, la valeur 1 à la colonne T1 et la valeur 0 aux autres colonnes.

En revanche, si la valeur moyenne de durée $P_6$ est inférieure au seuil de durée, on peut supposer que le véhicule est sur route de campagne ou sur route de montagne ou sur autoroute. Alors, au cours d'une étape Ea6, le calculateur affecte à ces mêmes lignes la valeur 1 aux colonnes T2, T3 et T4 et la valeur 0 à la colonne T1.

Le septième paramètre considéré est le nombre $P_7$ de virages effectués par le véhicule.

Ce paramètre permet de dissocier les autoroutes des autres types de routes.

On peut décrire la façon selon laquelle les valeurs de ce paramètre sont exploitées en se référant à la figure 3.

Comme le montre la figure 3, au cours d'une première étape Ec1, le calculateur acquiert les valeurs successivement prises par la vitesse longitudinale du véhicule automobile le long du trajet.

Au cours d'une deuxième étape Ec2, le calculateur acquiert les valeurs successivement prises par l'accélération latérale subie par le véhicule automobile.

Au cours d'une troisième étape Ec3, le calculateur découpe le trajet en plusieurs intervalles de travail $\Delta_7$.

Ici, ces intervalles de travail $\Delta_7$ sont des intervalles de distance réguliers, choisis de façon que les résultats soient représentatifs du type de voie empruntée par le véhicule.

Il s'agit ici d'intervalle de plus de 100 mètres, et préférentiellement d'intervalles de 1,5 km. Le trajet est alors découpé en intervalles de travail $\Delta_7$ en intégrant les valeurs de vitesses mesurées pour obtenir des intervalles de distance.

Au cours d'une quatrième étape Ec4, le calculateur calcule, au sein de chaque intervalle de travail $\Delta_7$, le nombre de fois où cette accélération latérale a dépassé un seuil prédéterminé, ici choisi égal à 0,2 fois la constante de gravité (ce qu'on peut écrire 0,2G).

Puis, au cours d'étapes Ec5, Ec6, Ec7, le calculateur compare ce nombre avec trois seuils prédéfinis, dont un seuil minimum, un seuil intermédiaire, et un seuil maximum.

A titre d'exemple, le seuil minimum peut être égal à 1, le seuil intermédiaire peut être égal à 5, et le seuil maximum peut être égal à 10.

Si le nombre est inférieur au seuil minimum, on peut supposer que le véhicule est sur autoroute. Alors, au cours d'une étape Ec8, le calculateur affecte à toutes les lignes de la matrice de virages qui correspondent à des périodes d'échantillonnage $\delta t$ compris dans l'intervalle de travail $\Delta_7$, la valeur 1 à la colonne T4 et la valeur 0 aux autres colonnes.

Si le nombre est compris entre le seuil minimum et le seuil intermédiaire, on peut supposer que le véhicule est sur route de campagne. Alors, au cours d'une étape Ec9, le calculateur affecte à ces mêmes lignes la valeur 1 à la colonne T3 et la valeur 0 aux autres colonnes.

Si le nombre est compris entre le seuil intermédiaire et le seuil maximum, on peut supposer que le véhicule est sur route de campagne ou sur route de montagne. Alors, au cours d'une étape Ec10, le calculateur affecte à ces mêmes lignes la valeur 1 aux colonnes T2 et T3 et la valeur 0 aux autres colonnes.

Enfin, si le nombre est supérieur au seuil maximum, on peut supposer que le véhicule est en agglomération ou sur route de montagne. Alors, au cours d'une étape Ec11, le calculateur affecte à ces mêmes lignes la valeur 1 aux colonnes T1 et T2 et la valeur 0 aux autres colonnes.

Ainsi le calculateur est-t-il en mesure d'établir sept matrices pour les sept paramètres, dont les lignes respectives sont associées à des périodes d'échantillonnage $\delta t$ correspondantes, et dont les colonnes sont associées aux mêmes quatre types de voies ici considérés.

Les sept matrices sont ensuite combinées de façon à ce que le type de voie empruntée par le véhicule sur chaque période d'échantillonnage $\delta t$ soit déterminé en fonction des valeurs prises par les sept paramètres $P_1$, $P_2$, $P_3$, $P_4$, $P_5$, $P_6$, $P_7$.

On pourrait donner un poids plus important à certain de ces paramètres. Toutefois, ici, le choix a été fait de donner le même poids à chaque paramètre. En effet, un paramètre peut s'avérer être un meilleur critère pour déterminer le type de voie dans une situation donnée, mais un mauvais critère dans d'autres situations. Donner le même poids à chaque paramètre s'avère donc être la solution qui permet d'aboutir aux meilleurs résultats.

La combinaison des sept matrices consiste alors simplement à faire la somme de ces matrices. Le résultat de cette somme est une matrice finale de même dimension que les sept autres, avec 4 colonnes correspondant aux quatre types de voie de circulation, et un nombre de lignes égal au nombre de périodes d'échantillonnages $\delta t$ considérées.

Tous les coefficients de cette matrice finale sont alors des coefficients de probabilité qui se présentent sous la forme d'entiers naturels compris entre 0 et 7, bornes comprises.

Pour chaque période d'échantillonnage $\delta t$,

c'est-à-dire pour chaque ligne de la matrice finale, le calculateur sélectionne la ou les colonne(s) où le coefficient est le plus élevé.

Si le coefficient de probabilité le plus élevé de la ligne considérée ne se retrouve que dans une colonne, le type de route associé à cette colonne et à cette période d'échantillonnage $\delta t$ est sélectionné.

Dans le cas où plusieurs colonnes ont le même coefficient de probabilité le plus élevé, on affecte le résultat « indéterminé » au type de voie de cette période d'échantillonnage $\delta t$.

On obtient ainsi un vecteur dont les lignes correspondent aux périodes d'échantillonnage $\delta t$ considérées et dont les coefficients indiquent le type de route associé. Ce coefficient peut ainsi être égal à :

- 0 si le type de voie est indéterminé,
- 1 si le type de voie est une voie en agglomération,
- 2 si le type de voie est une route de montagne,
- 3 si le type de voie est une route de campagne,
- 4 si le type de voie est une autoroute.

De façon préférentielle, ce vecteur pourra être corrigé au moyen de deux opérations de filtrage.

La première opération de filtrage est la suivante.

Si une période d'échantillonnage $\delta t$ correspond à une voie de type indéterminé et que les périodes d'échantillonnage $\delta t$ précédente et suivante sont de même type, lequel n'est pas indéterminé, alors ce dernier type de voie est affecté à cette période d'échantillonnage $\delta t$.

A titre d'exemple, on peut considérer trois périodes d'échantillonnage $\delta t$ successives. Si les première et troisième périodes d'échantillonnage $\delta t$ correspondent à une voie de type « autoroute » et que la seconde période d'échantillonnage $\delta t$ correspond à une voie de type « indéterminé », alors le type de voie « autoroute » est affecté à la deuxième période d'échantillonnage $\delta t$.

On notera que cette situation intervient généralement lors du passage du véhicule sur un échangeur, entre deux voies d'autoroute, ou lors d'un ralentissement dans une zone de travaux.

La seconde opération de filtrage est la suivante.

Si un premier type de voie affecté à plusieurs périodes d'échantillonnage $\delta t$ successives (de durée totale inférieure à la minute) est différent d'un second type de voie affecté aux périodes d'échantillonnage précédant et suivant ces périodes d'échantillonnage $\delta t$ successives, alors le second type de voie est affecté à ces périodes d'échantillonnage $\delta t$ successives.

A titre d'exemple, on peut considérer une centaine de périodes d'échantillonnage $\delta t$ successives. Si les 40 premières et les 40 dernières périodes d'échantillonnage $\delta t$ sont associées à un type de voie « autoroute », alors que les 20 périodes d'échantillonnage $\delta t$ du milieu sont associées à un type de voie « route de campagne », on modifie l'association de ces 20 périodes d'échantillonnage $\delta t$ du milieu de façon à y affecter le type de voie « autoroute ».

On notera que cette situation intervient également lors du passage du véhicule sur un échangeur, entre deux voies d'autoroute, lors d'un ralentissement dans une zone de travaux...

Le résultat de ces opérations de filtrage sera un vecteur permettant de savoir le pourcentage de roulage effectué sur chaque type de voie par le véhicule automobile lors de son dernier trajet.

A ce stade, on pourra noter que plus le nombre de paramètres considérés est élevé, plus les résultats seront fiables.

L'utilisation de sept paramètres permet ainsi de diluer une erreur de qualification d'un type de voie commise du fait de la valeur d'un des sept paramètres, grâce aux six autres paramètres.

Par exemple, dans le cas d'une descente de montagne, le paramètre de couple pourra attribuer à tort à ce trajet un type « route de campagne ». Dans ce cas, cette erreur sera compensée par le fait que les paramètres portant sur le nombre de virages, la vitesse angulaire de volant, la pente, et l'accélération longitudinale identifieront bien cette partie du trajet comme étant une route de montagne.

Le nombre de paramètres considérés sera de préférence impair pour réduire le nombre de chances d'obtenir la qualification « indéterminée » pour les types de voies.

On pourra également noter que les intervalles de travail utilisés pour les sept paramètres sont différents les uns des autres. Ainsi, au moins un intervalle de travail est différent des autres. De préférence, un même intervalle de travail ne sera pas utilisé pour plus de trois paramètres différents.

De cette façon, les mesures utilisées pour construire les sept matrices auront été réalisées pendant des périodes décalées les unes par rapport aux autres, ce qui fournira des résultats plus fiables.

En effet, à titre d'exemple, un roulage en ville à 50km/h stabilisé et sans virage pendant 1 kilomètre pourrait être interprété comme de l'autoroute car tous les paramètres répondent à ce profil, hormis la vitesse moyenne et le couple moyen. Mais, le fait d'avoir des intervalles de travail qui ne concordent pas dans le temps va permettre de résoudre ce problème puisqu'un intervalle de travail associé à un premier des paramètres sera lié avec d'autres intervalles de travail qui auront commencé plus tôt pour certains autres paramètres (avant que le véhicule arrive sur cette rue rectiligne) ou plus tard pour d'autres paramètres (après que le véhicule sera sorti de cette rue rectiligne).

On peut maintenant donner plusieurs applications industrielles de ce procédé de détermination du type de voie empruntée par un véhicule automobile.

La première application est faite en après-vente. Ainsi, lorsque les véhicules sont ramenés pour révision chez des concessionnaires de la marque, il est possible de déterminer le pourcentage de roulage sur chaque type de voie réalisé par chaque voiture. Cette information peut alors être exploitée pour adapter au mieux les futurs modèles de voitures aux utilisations qui en sont majoritairement faites. En d'autres termes, cela permettra de développer des véhicules qui répondent bien aux utilisations qui en seront faites par de futurs clients.

En outre, à titre d'exemple, il est possible d'adapter la pression des pneumatiques, les amortisseurs, la démultiplication de la direction, voire même les réglages des systèmes audio aux conditions de roulage majoritairement expérimentées par les usagers du modèle de véhicule concerné.

Il est possible en outre de mieux prévoir l'usure des pièces d'usure des véhicules de façon générale (par modèle de véhicule) ou de façon particulière (véhicule par véhicule). Ainsi pourra-t-on avertir l'usager du meilleur moment pour faire réviser son véhicule, pour changer ses pneumatiques, ses plaquettes de frein....

Il est également possible d'utiliser les résultats de ce procédé en temps réel. Ainsi, lorsque le véhicule roule et qu'on détecte qu'il est sur un type particulier de voie (par exemple sur une route de montagne), on peut également adapter les amortisseurs et la démultiplication de la direction à ce type de route.

La présente invention n'est nullement limitée au mode de réalisation décrit et représenté, mais l'homme du métier saura y apporter toute variante conforme à l'invention.

Ainsi, on pourrait prévoir lors de la construction de chaque matrice d'affecter aux coefficients de probabilité des valeurs différentes de 0 et 1. Par exemple, lorsque le paramètre ne permet pas de déterminer si le type de voie est plutôt une route de montagne ou une route de campagne, on pourra affecter aux colonnes T2 et T3 des coefficients égaux à 0,5.

Selon une autre variante de l'invention, on pourrait utiliser des paramètres basés sur des informations obtenues par des capteurs autres que ceux envisagés ci-dessus. Ainsi pourrait-on par exemple utiliser des informations obtenues via les caméras équipant le véhicule automobile. Il pourrait par exemple s'agir de la vitesse maximum relevée sur un panneau de signalisation, ou de toute autre information lisible sur un panneau de signalisation.

**Revendications**

1. Procédé de détermination d'un type de voie (T1, T2, T3, T4) empruntée par un véhicule automobile, comportant des étapes de :

    - acquisition, pour au moins deux paramètres ($P_1$, $P_2$, $P_3$, $P_4$, $P_5$, $P_6$, $P_7$), et pour chaque paramètre durant au moins un intervalle de travail respectif ($\Delta_1$, $\Delta_2$, $\Delta_3$, $\Delta_4$, $\Delta_5$, $\Delta_6$, $\Delta_7$), des valeurs desdits paramètres ($P_1$, $P_2$, $P_3$, $P_4$, $P_5$, $P_6$, $P_7$) qui sont issues de mesures réalisées par des capteurs équipant le véhicule automobile et qui sont relatifs à la dynamique du véhicule,

    - détermination par un calculateur, pour chaque paramètre ($P_1$, $P_2$, $P_3$, $P_4$, $P_5$, $P_6$, $P_7$) et pour l'ensemble des périodes d'échantillonnage ($\delta t$) comprise dans chacun parmi l'au moins un intervalle de travail ($\Delta_1$, $\Delta_2$, $\Delta_3$, $\Delta_4$, $\Delta_5$, $\Delta_6$, $\Delta_7$) associé audit paramètre, d'un coefficient de probabilité que le véhicule se trouve sur un type de voie (T1, T2, T3, T4) plutôt qu'un autre, en fonction des valeurs prises par le paramètre ($P_1$, $P_2$, $P_3$, $P_4$, $P_5$, $P_6$, $P_7$) pendant ledit intervalle de travail ($\Delta_1$, $\Delta_2$, $\Delta_3$, $\Delta_4$, $\Delta_5$, $\Delta_6$, $\Delta_7$), et

    - déduction par le calculateur, en fonction des coefficients de probabilité déterminés, du type de voie (T1, T2, T3, T4) empruntée par le véhicule automobile durant une même période d'échantillonnage ($\delta t$) appartenant à des intervalles de travail ($\Delta_1$, $\Delta_2$, $\Delta_3$, $\Delta_4$, $\Delta_5$, $\Delta_6$, $\Delta_7$) associés chacun à l'un respectif desdits paramètres ($P_1$, $P_2$, $P_3$, $P_4$, $P_5$, $P_6$, $P_7$) ,

    dans lequel les intervalles de travail ($\Delta_1$, $\Delta_2$, $\Delta_3$, $\Delta_4$, $\Delta_5$, $\Delta_6$, $\Delta_7$) utilisés pour l'acquisition des valeurs desdits au moins deux paramètres ($P_1$, $P_2$, $P_3$, $P_4$, $P_5$, $P_6$, $P_7$) coïncident entre eux en partie seulement.

2. Procédé de détermination selon la revendication précédente, dans lequel le type de voie (T1, T2, T3, T4) est sélectionné parmi au moins les autoroutes (T4), les routes d'agglomération (T1), les routes de campagne (T3), et éventuellement aussi les routes de montagne (T4).

3. Procédé de détermination selon l'une des revendications précédentes, dans lequel les valeurs des paramètres ($P_1$, $P_2$, $P_3$, $P_4$, $P_5$, $P_6$, $P_7$) sont moyennées sur leurs intervalles de travail ($\Delta_1$, $\Delta_2$, $\Delta_3$, $\Delta_4$, $\Delta_5$, $\Delta_6$, $\Delta_7$), et les moyennes obtenues sont chacune comparées à au moins un seuil prédéterminé pour en déduire les coefficients de probabilité.

4. Procédé de détermination selon la revendication précédente, dans lequel, un premier des paramètres étant la vitesse longitudinale ($P_1$) du véhicule automobile, il est prévu une opération de filtrage durant laquelle si, pour un intervalle de travail, la moyenne est inférieure à un seuil déterminé, le coefficient de probabilité pour chaque période d'échantillonnage ($\delta t$) comprise dans ledit intervalle de travail est déterminé en fonction du coefficient de probabilité déterminé pour la période d'échantillonnage qui suit ou qui précède ledit intervalle de travail.

5. Procédé de détermination selon l'une des revendications précédentes, dans lequel les intervalles de

travail ($\Delta_1$, $\Delta_2$, $\Delta_3$, $\Delta_4$, $\Delta_5$, $\Delta_6$, $\Delta_7$) sont des intervalles de distance ou de temps.

6. Procédé de détermination selon l'une des revendications précédentes, dans lequel les étapes d'acquisition et de détermination sont réalisées avec au moins cinq paramètres ($P_1$, $P_2$, $P_3$, $P_4$, $P_5$, $P_6$, $P_7$) distincts, et de préférence avec un nombre impair de paramètres ($P_1$, $P_2$, $P_3$, $P_4$, $P_5$, $P_6$, $P_7$) distincts qui est par exemple égal à sept.

7. Procédé de détermination selon l'une des revendications précédentes, dans lequel les paramètres ($P_1$, $P_2$, $P_3$, $P_4$, $P_5$, $P_6$, $P_7$) sont choisis parmi :

   - une vitesse longitudinale ($P_1$) du véhicule automobile,
   - une accélération longitudinale ($P_2$) du véhicule automobile,
   - une vitesse angulaire ($P_3$) d'un élément d'un système de direction du véhicule automobile,
   - un couple ($P_4$) développé par un moteur équipant le véhicule automobile,
   - une pente ($P_5$) de la voie empruntée par le véhicule automobile,
   - une durée ($P_6$) pendant laquelle le régime dudit moteur est inférieur à un seuil prédéterminé, et
   - un nombre de virages ($P_7$) rencontrés par le véhicule.

8. Utilisation du procédé de détermination selon l'une des revendications 1 à 7, dans lequel, l'étape de déduction étant mise en œuvre pendant le roulage du véhicule automobile, il est prévu pendant ledit roulage une opération subséquente d'ajustement d'au moins un réglage interne du véhicule automobile en fonction du type de voie (T1, T2, T3, T4) déterminé.

9. Utilisation du procédé de détermination selon l'une des revendications 1 à 7, dans lequel, le véhicule ayant effectué plusieurs trajets, il est prévu une opération subséquente de détermination de l'usage principal du véhicule automobile ou de détermination de l'usure d'au moins une pièce d'usure du véhicule automobile en fonction des types de voies (T1, T2, T3, T4) détectés sur lesdits plusieurs trajets.

**Patentansprüche**

1. Verfahren zur Bestimmung einer Art einer Fahrspur (T1, T2, T3, T4), die ein Kraftfahrzeug benutzt, umfassend die folgenden Schritte:

   - Erfassen, für mindestens zwei Parameter ($P_1$, $P_2$, $P_3$, $P_4$, $P_5$, $P_6$, $P_7$) und für jeden Parameter während mindestens eines jeweiligen Arbeitsintervalls ($\Delta_1$, $\Delta_2$, $\Delta_3$, $\Delta_4$, $\Delta_5$, $\Delta_6$, $\Delta_7$), der Werte der Parameter ($P_1$, $P_2$, $P_3$, $P_4$, $P_5$, $P_6$, $P_7$), die aus Messungen hervorgegangen sind, die von Sensoren, mit denen das Kraftfahrzeug ausgestattet ist, ausgeführt werden und die sich auf die Dynamik des Fahrzeugs beziehen;
   - Bestimmen, durch einen Rechner, für jeden Parameter ($P_1$, $P_2$, $P_3$, $P_4$, $P_5$, $P_6$, $P_7$) und für alle Sampling-Perioden ($\delta t$), die in jedem unter dem mindestens einen Arbeitsintervall ($\Delta_1$, $\Delta_2$, $\Delta_3$, $\Delta_4$, $\Delta_5$, $\Delta_6$, $\Delta_7$), das dem Parameter zugeordnet ist, enthalten sind, eines Wahrscheinlichkeitskoeffizienten, dass sich das Fahrzeug eher auf einer Art einer Fahrspur (T1, T2, T3, T4) als auf einer anderen befindet, in Abhängigkeit von den Werten, die der Parameter ($P_1$, $P_2$, $P_3$, $P_4$, $P_5$, $P_6$, $P_7$) während des Arbeitsintervalls ($\Delta_1$, $\Delta_2$, $\Delta_3$, $\Delta_4$, $\Delta_5$, $\Delta_6$, $\Delta_7$) angenommen hat, und
   - Ableiten, durch den Rechner, in Abhängigkeit von den bestimmten Wahrscheinlichkeitskoeffizienten, der Art der Fahrspur (T1, T2, T3, T4), die das Kraftfahrzeug während einer selben Sampling-Periode ($\delta t$), die zu Arbeitsintervallen ($\Delta_1$, $\Delta_2$, $\Delta_3$, $\Delta_4$, $\Delta_5$, $\Delta_6$, $\Delta_7$) gehört, die jeweils einem jeweiligen der Parameter ($P_1$, $P_2$, $P_3$, $P_4$, $P_5$, $P_6$, $P_7$) zugeordnet sind, benutzt,

   wobei die Arbeitsintervalle ($\Delta_1$, $\Delta_2$, $\Delta_3$, $\Delta_4$, $\Delta_5$, $\Delta_6$, $\Delta_7$), die zum Erfassen der Werte der mindestens zwei Parameter ($P_1$, $P_2$, $P_3$, $P_4$, $P_5$, $P_6$, $P_7$) verwendet werden, untereinander nur teilweise übereinstimmen.

2. Verfahren zur Bestimmung nach dem vorhergehenden Anspruch, wobei die Art der Fahrspur (T1, T2, T3, T4) unter mindestens den Autobahnen (T4), den Ortsstraßen (T1), den Landstraßen (T3) und gegebenenfalls auch den Gebirgsstraßen (T4) ausgewählt wird.

3. Verfahren zur Bestimmung nach einem der vorhergehenden Ansprüche, wobei die Werte der Parameter ($P_1$, $P_2$, $P_3$, $P_4$, $P_5$, $P_6$, $P_7$) über ihre Arbeitsintervalle ($\Delta_1$, $\Delta_2$, $\Delta_3$, $\Delta_4$, $\Delta_5$, $\Delta_6$, $\Delta_7$) gemittelt werden und die erhaltenen Mittelwerte jeweils mit mindestens einem vorbestimmten Schwellenwert verglichen werden, um daraus die Wahrscheinlichkeitskoeffizienten abzuleiten.

4. Verfahren zur Bestimmung nach dem vorhergehenden Anspruch, wobei, wenn ein erster der Parameter die Längsgeschwindigkeit ($P_1$) des Kraftfahrzeugs ist, ein Filtervorgang vorgesehen ist, bei dem, wenn für ein Arbeitsintervall der Mittelwert kleiner als ein bestimmter Schwellenwert ist, der Wahrscheinlichkeitskoeffizient für jede Sampling-Periode ($\delta t$), die in dem Arbeitsintervall enthalten ist, in Abhängigkeit von dem Wahrscheinlichkeitskoeffizienten bestimmt wird, der für die Sampling-Periode bestimmt wird, die auf das Arbeitsintervall folgt oder ihm vorausgeht.

5. Verfahren zur Bestimmung nach einem der vorhergehenden Ansprüche, wobei die Arbeitsintervalle ($\Delta_1$, $\Delta_2$, $\Delta_3$, $\Delta_4$, $\Delta_5$, $\Delta_6$, $\Delta_7$) Distanz- oder Zeitintervalle sind.

6. Verfahren zur Bestimmung nach einem der vorhergehenden Ansprüche, wobei die Erfassungs- und Bestimmungsschritte mit mindestens fünf verschiedenen Parametern ($P_1$, $P_2$, $P_3$, $P_4$, $P_5$, $P_6$, $P_7$) und vorzugsweise mit einer ungeraden Anzahl von verschiedenen Parametern ($P_1$, $P_2$, $P_3$, $P_4$, $P_5$, $P_6$, $P_7$), die beispielsweise sieben beträgt, ausgeführt werden.

7. Verfahren zur Bestimmung nach einem der vorhergehenden Ansprüche, wobei die Parameter ($P_1$, $P_2$, $P_3$, $P_4$, $P_5$, $P_6$, $P_7$) ausgewählt sind aus:

   - einer Längsgeschwindigkeit ($P_1$) des Kraftfahrzeugs,
   - einer Längsbeschleunigung ($P_2$) des Kraftfahrzeugs,
   - einer Winkelgeschwindigkeit ($P_3$) eines Elements eines Lenksystems des Kraftfahrzeugs,
   - einem Drehmoment ($P_4$), das von einem Motor entfaltet wird, mit dem das Kraftfahrzeug ausgestattet ist,
   - einer Steigung ($P_5$) der Fahrspur, die von dem Kraftfahrzeug benutzt wird,
   - einer Dauer ($P_6$), während der die Drehzahl des Motors geringer als ein vorbestimmter Schwellenwert ist, und
   - einer Anzahl von Kurven ($P_7$), die von dem Fahrzeug angetroffen werden.

8. Verwendung des Verfahrens zur Bestimmung nach einem der Ansprüche 1 bis 7, wobei, wenn der Schritt des Ableitens während des Fahrens des Kraftfahrzeugs durchgeführt wird, während des Fahrens ein nachfolgender Vorgang zum Anpassen mindestens einer internen Einstellung des Kraftfahrzeugs in Abhängigkeit von der bestimmten Art der Fahrspur (T1, T2, T3, T4) vorgesehen ist.

9. Verwendung des Verfahrens zur Bestimmung nach einem der Ansprüche 1 bis 7, wobei, wenn das Fahrzeug mehrere Strecken zurückgelegt hat, ein nachfolgender Vorgang zur Bestimmung der Hauptnutzung des Kraftfahrzeugs oder zur Bestimmung des Verschleißes mindestens eines Verschleißteils des Kraftfahrzeugs in Abhängigkeit von den auf den mehreren Strecken detektierten Arten von Fahrspuren (T1, T2, T3, T4) vorgesehen ist.

**Claims**

1. Method for determining a type of track (T1, T2, T3, T4) used by a motor vehicle, comprising the steps of:

   - acquisition, for at least two parameters ($P_1$, $P_2$, $P_3$, $P_4$, $P_5$, $P_6$, $P_7$), and for each parameter during at least one respective working interval ($\Delta_1$, $\Delta_2$, $\Delta_3$, $\Delta_4$, $\Delta_5$, $\Delta_6$, $\Delta_7$), of the values of said parameters ($P_1$, $P_2$, $P_3$, $P_4$, $P_5$, $P_6$, $P_7$) which are derived from measurements taken by sensors fitted to the motor vehicle and which relate to the vehicle dynamics,
   - determination by a computer, for each parameter ($P_1$, $P_2$, $P_3$, $P_4$, $P_5$, $P_6$, $P_7$) and for all sampling periods ($\delta t$) within each of the at least one working interval ($\Delta_1$, $\Delta_2$, $\Delta_3$, $\Delta_4$, $\Delta_5$, $\Delta_6$, $\Delta_7$) associated with said parameter, of a coefficient of probability that the vehicle is on one type of track (T1, T2, T3, T4) rather than another, on the basis of the values assumed by the parameter ($P_1$, $P_2$, $P_3$, $P_4$, $P_5$, $P_6$, $P_7$) during said working interval ($\Delta_1$, $\Delta_2$, $\Delta_3$, $\Delta_4$, $\Delta_5$, $\Delta_6$, $\Delta_7$), and
   - deduction by the calculator, on the basis of the determined probability coefficients, of the type of track (T1, T2, T3, T4) taken by the motor vehicle during one same sampling period ($\delta t$) belonging to working intervals ($\Delta_1$, $\Delta_2$, $\Delta_3$, $\Delta_4$, $\Delta_5$, $\Delta_6$, $\Delta_7$) each associated with a respective one of said parameters ($P_1$, $P_2$, $P_3$, $P_4$, $P_5$, $P_6$, $P_7$),

   wherein the working intervals ($\Delta_1$, $\Delta_2$, $\Delta_3$, $\Delta_4$, $\Delta_5$, $\Delta_6$, $\Delta_7$) used for the acquisition of the values of said at least two parameters ($P_1$, $P_2$, $P_3$, $P_4$, $P_5$, $P_6$, $P_7$) coincide with one another only in part.

2. Determination method according to the preceding claim, wherein the type of track (T1, T2, T3, T4) is selected from at least motorways (T4), urban roads (T1), country roads (T3) and optionally also mountain roads (T4).

3. Determination method according to one of the preceding claims, wherein the values of the parameters ($P_1$, $P_2$, $P_3$, $P_4$, $P_5$, $P_6$, $P_7$) are averaged over their working intervals ($\Delta_1$, $\Delta_2$, $\Delta_3$, $\Delta_4$, $\Delta_5$, $\Delta_6$, $\Delta_7$), and the averages obtained are each compared with at least one predetermined threshold to deduce the probability coefficients therefrom.

4. Determination method according to the preceding claim, wherein, with a first of the parameters being the longitudinal speed ($P_1$) of the motor vehicle, a filtering operation is provided during which operation if, for one working interval, the average is lower than a predetermined threshold, the probability coefficient for each sampling period ($\delta t$) included in said working interval is determined on the basis of the probability coefficient determined for the sampling period following or preceding said working interval.

5. Determination method according to one of the preceding claims, wherein the working intervals ($\Delta_1$, $\Delta_2$, $\Delta_3$, $\Delta_4$, $\Delta_5$, $\Delta_6$, $\Delta_7$) are distance or time intervals.

6. Determination method according to one of the preceding claims, wherein the acquisition and determination steps are carried out with at least five distinct parameters ($P_1$, $P_2$, $P_3$, $P_4$, $P_5$, $P_6$, $P_7$), and preferably with an odd number, for example equal to seven, of distinct parameters ($P_1$, $P_2$, $P_3$, $P_4$, $P_5$, $P_6$, $P_7$).

7. Determination method according to one of the preceding claims, wherein the parameters ($P_1$, $P_2$, $P_3$, $P_4$, $P_5$, $P_6$, $P_7$) are chosen from:

   - a longitudinal speed ($P_1$) of the motor vehicle,
   - a longitudinal acceleration ($P_2$) of the motor vehicle,
   - an angular velocity ($P_3$) of a component of a steering system of the motor vehicle,
   - a torque ($P_4$) developed by an engine fitted to the motor vehicle,
   - a gradient ($P_5$) of the track taken by the motor vehicle,
   - a period ($P_6$) during which the engine-speed of said engine is lower than a predetermined threshold, and
   - a number of bends ($P_7$) encountered by the vehicle.

8. Use of the determination method according to one of Claims 1 to 7, wherein, with the deduction step being carried out while the motor vehicle is being driven, a subsequent operation of, while said vehicle is being driven, adjusting at least one internal setting of the motor vehicle according to the determined track type (T1, T2, T3, T4) is provided.

9. Use of the determination method according to one of Claims 1 to 7, wherein, once the vehicle has made several journeys, a subsequent operation of determining the main use of the motor vehicle or of determining the wear of at least one wearing part of the motor vehicle according to the track types (T1, T2, T3, T4) detected on said plurality of journeys is provided.

# Fig.1

| T1 | T2 | T3 | T4 |
|----|----|----|----|
| 1 | 0 | 0 | 0 |
| 0 | 1 | 0 | 0 |
| 0 | 1 | 0 | 0 |
| ... | ... | ... | ... |

# Fig.2

```
  ┌──────┐        ┌──────┐
  │ Eb1  │        │ Eb2  │
  └──────┘        └──────┘
      │               │
      ▼               ▼
  ┌──────┐        ┌──────┐
  │ Eb3  │───────▶│ Eb4  │
  └──────┘        └──────┘
                      │
                      ▼
                    ◇ Eb5 ◇──────────┐
                      │               ▼
                      │             ◇ Eb6 ◇──────────┐
                      │               │               │
                      ▼               ▼               ▼
                  ( Eb7 )         ( Eb8 )         ( Eb9 )
```

# Fig.3

```
┌──────┐        ┌──────┐
│ Ec1  │        │ Ec2  │
└──────┘        └──────┘
    │               │
    ▼               ▼
┌──────┐        ┌──────┐
│ Ec3  │ ─────▶ │ Ec4  │
└──────┘        └──────┘
                    │
                    ▼
                  ◇ Ec5 ◇ ──────┐
                    │           ▼
                    │         ◇ Ec6 ◇ ──────┐
                    │           │           ▼
                    │           │         ◇ Ec7 ◇ ──────┐
                    │           │           │           ▼
                    ▼           ▼           ▼           ▼
                 ( Ec8 )    ( Ec9 )    ( Ec10 )    ( Ec11 )
```

# Fig.4

```
┌──────┐        ┌──────┐
│ Ea1  │        │ Ea2  │
└──────┘        └──────┘
    │               │
    ▼               ▼
┌──────┐        ┌──────┐
│ Ea3  │ ─────▶ │ Ea4  │
└──────┘        └──────┘
                    │
                    ▼
                  ◇ Ea5 ◇ ──────┐
                    │           ▼
                    ▼           
                 ( Ea6 )    ( Ea7 )
```

**EP 3 875 906 B1**

## RÉFÉRENCES CITÉES DANS LA DESCRIPTION

**Documents brevets cités dans la description**

- WO 2018011500 A
- US 20020128751 A